# EUROPÄISCHE PATENTSCHRIFT

(11) **EP 3 497 349 B1**
(45) Veröffentlichungstag und Bekanntmachung des Hinweises auf die Patenterteilung: **04.01.2023**
(21) Anmeldenummer: 17730436.7
(22) Anmeldetag: 08.06.2017
(51) Int. Cl.: F16F 9/04

(54) **LUFTFEDERBALG MIT SELBSTREINIGENDER OBERFLÄCHE**
AIR-SPRING BELLOWS COMPRISING A SELF-CLEANING SURFACE
SOUFFLET DE RESSORT PNEUMATIQUE À SURFACE AUTONETTOYANTE

(30) Priorität: 15.08.2016 DE 102016215159
(43) Veröffentlichungstag der Anmeldung: 19.06.2019
(73) Patentinhaber: ContiTech Luftfedersysteme GmbH, 30165 Hannover (DE)
(72) Erfinder: RITTWEGER, Stefan, 30826 Garbsen (DE); KROPF, Andreas, 31275 Lehrte (DE); GEDENK, Volker, 30966 Hemmingen (DE)
(74) Vertreter: Continental Corporation
(86) Internationale Anmeldenummer: PCT/EP2017/063973
(87) Internationale Veröffentlichungsnummer: WO 2018/033264

(56) Entgegenhaltungen:
- EP-A1- 1 559 925
- EP-A2- 1 371 872
- DE-A1- 10 007 153

## Beschreibung

Die Erfindung betrifft einen Luftfederbalg aus elastomerem Material, der an seinen Balgenden mit Hilfe von Anschlussteilen, hier also Luftfederdeckel sowie Kolben oder Felge, zwischen gefederter und ungefederter Masse eingespannt ist und beim Ein- bzw. Ausfedern Rollbewegungen z.B. unter Ausbildung einer Rollfalte ausführt und/oder sich an Anschlussteile anlegt, wobei der Luftfederbalg mindestens auf Teilen seiner Außenoberfläche eine von einer im Wesentlichen glatten Oberfläche sich unterscheidende Struktur aufweist.

Das Aufbringen von Strukturen, beispielsweise Rippen, Noppen, Vorsprünge etc. auf die Außenoberfläche von elastomeren Balg-Körpern ist in unterschiedlichen Bereichen des Standes der Technik und aus unterschiedlichen Gründen bekannt.

So offenbart die EP 0 199 952 A1 einen Rollbalg für Fahrzeugluftfederungen, der auf seiner Außenseite mit erhaben angeformten Axialrippen ausgebildet ist, welche als Anstandshalter wirken und ein knickfreies, kontinuierliche Rollen der Rollfalte ermöglichen sollen und auch dazu dienen, den durch Verschmutzung auftretenden Abrieb an der Außenseite eines Luftfederrollbalgs zu vermindern.

Die EP 1 314 581 B1 offenbart einen gattungsfremden balgartigen Gegenstand, nämlich einen Luftreifen, der auf seiner äußeren Seite Umfangsrillen aufweist, um den Federungskomfort des Reifens zu erhöhen.

In einer ebenfalls gattungsfremden Anwendung offenbart die EP 2 977 233 A2 einen Fahrzeugluftreifen, dessen Seitenwand in einem Schulterbereich mit so genannten "technisch wirksamen" Strukturen versehen ist. Diese Strukturen sind als umlaufende Rillen ausgebildet und sollen Verschleiß bzw. Abrieb im Betrieb vermindern und durch das Bereitstellen weiterer profilierter Bereiche das Handling des Fahrzeugs im Grenzbereich verbessern.

Das Dokument DE 100 07 153 A1, welches als der nächstliegende Stand der Technik angesehen wird, offenbart die Merkmale des Oberbegriffs des Anspruchs 1.

Die bisher auch bei den gattungsfremden Anwendungen bekannten Ausbildungen offenbaren also Oberflächen mit im Wesentlichen als profilierte Rillen oder Rippen ausgebildeten Strukturen, die verhindern sollen, dass die tragenden Wandteile eines Balgkörpers auf ihrer Außenseite durch Abrieb geschädigt werden können. Die Ausbildung solcher Strukturen, wie zum Beispiel in der EP 0 199 952 A1 für einen Luftfederrollbalg offenbart, verändern aber nachteiligerweise auch die Steifigkeit und damit die Funktion und das Federungsverhalten solcher Balgkörper, was für einen Luftfederbalg gerade nicht gewünscht ist.

Luftfederbälge für Schienenfahrzeuge und LKW sind regelmäßig besonders hohen Belastungen unterworfen. Jeder der Luftfederbälge eines solchen Fahrzeugs ist durch mehrere Tonnen belastet und wird in einem recht rauen Betrieb über viele Jahre eingesetzt, oft mehr als zehn Jahre. Insbesondere die radialen Auslenkungen von bis zu 150 mm setzen dem Balg stark zu. Dazu kommt, dass solche Bauteile zwar periodisch auf Schäden und Funktion geprüft werden, aber ansonsten keiner besonderen Wartung oder Reinigung unterliegen. Gerade aber im Rollfaltenbereich oder an den Auflageflächen bzw. Anlagebereichen der Luftfederbälge kann es vorkommen, dass sich z.B. Sand oder Staub in feuchter Umgebung ablagert oder "anbackt". Dieser feste Belag hat dann eine stark abrasive Wirkung. In erster Linie der Luftfederbalg, aber auch die zur Abstützung oder Anlage der Luftfederbalg-Oberfläche vorgesehenen Metall-oder Kunststoffelemente können dadurch erheblichen Schaden nehmen.

Für die Erfindung bestand also die Aufgabe, einen Luftfederbalg bereitzustellen, der eine verbesserte Resistenz gegen solche Verschmutzungen und deren Nachwirkungen aufweist und der dabei in seiner Funktion, d.h. insbesondere in seinem Federungsverhalten, nicht nachteilig beeinflusst wird.

Gelöst wird diese Aufgabe durch die Merkmale des Hauptanspruchs. Weitere vorteilhafte Ausbildungen sind in den Unteransprüchen offenbart.

Dabei enthält die sich von einer im Wesentlichen glatten Oberfläche unterscheidende Struktur eine Vielzahl von auf der Außenoberfläche ausgebildeten länglich konkaven Einprägungen bzw. Rillen, die in ihrer Anordnung zur Achse des Luftfederbalges so ausgerichtet sind, dass durch das elastische Ein- bzw. Ausfedern des Luftfederbalgs die Form der Einprägungen so veränderbar ist, dass an der Oberfläche bzw. in den Einprägungen anhaftende, im Wesentlichen aus der Umgebung stammende Fremdstoffe lösbar sind.

Die länglich konkaven Einprägungen bzw. Rillen sind so ausgerichtet, dass sich deren Querschnitt bei der Bewegung des Luftfederbalgs maximal elastisch verformt und in der Breite und Tiefe so verändert, dass darin liegende Verschmutzung mechanisch "herausgebrochen" wird. Durch die makroskopisch Ausbildung der Oberfläche in Form von Einprägungen oder Rillen findet sich dieser Effekt des Ausbrechens durch Verformung überraschenderweise auch im Rauigkeitsbereich des elastomeren Materials wieder, also im mikroskopischen Bereich. Durch die konkave Form der Einprägungen wird also die Selbstreinigung überaus begünstigt. Damit wird sogar in feuchter Umgebung auf der Balgoberfläche ablagerter und nach Trocknung ggf. angebackener Sand oder Staub ohne weiteres abgesprengt. Die Lebensdauer und die Langzeit-Belastbarkeit eines solchen Luftfederbalgs werden dadurch wesentlich erhöht.

Die erfindungsgemäße Ausbildung besteht darin, dass die länglich konkaven Einprägungen ringförmig nebeneinander liegend oder schraubenförmig sich im Wesentlichen in Umfangsrichtung und senkrecht zur Belastungsrichtung des Luftfederbalgs erstrecken. Als Belastungsrichtung wird hier die Hauptbelastungsrichtung verstanden, also die Belastung im Wesentlichen in Richtung der Balgachse. Betrachtet man den Querschnitt der Balgwand als solche, so ergibt sich durch die ringförmig nebeneinander angeordneten länglich konkaven Einprägungen auf der äußeren Oberfläche eine Art "wellenförmig" ausgebildete Oberfläche der Balgwand. Eine solche Ausbildung verstärkt den oben genannten Reinigungseffekt.

Eine weitere vorteilhafte Ausbildung besteht darin, dass die länglich konkaven Einprägungen Unterbrechungen aufweisen, insbesondere kreuzende Kanäle oder Rillen, die mehrere nebeneinander liegende Einprägungen miteinander verbinden. Eine solche Ausbildung ergibt Vorteile in Bezug auf eine gute Entlüftung der Bälge in der Vulkanisationsform. Bei einem Herstellungsverfahren, bei dem die länglich konkaven Einprägungen bzw. Rillen während der Vulkanisation des Balgkörpers in eine entsprechende Außenform ausgebildet/ausgeformt werden, ist es wesentlich, dass für eine ausreichende Entlüftung gesorgt wird. Die erfindungsgemäß vorgesehenen Unterbrechungen lassen dies auf einfache Weise möglich werden.

Eine weitere vorteilhafte Ausbildung besteht darin, dass die länglich konkaven Einprägungen, vorzugsweise Gruppen von mehreren nebeneinander liegenden Einprägungen, abhängig von ihrer Position auf der Außenoberfläche des Luftfederbalgs eine unterschiedliche Breite und/oder Tiefe aufweisen. Auf diese Weise kann die oben beschriebene Reinigungsfunktion in bestimmten Balgbereichen verstärkt werden. Welche Bereiche ausgewählt werden für solche Maßnahmen, ergibt sich aus Erfahrungswerten bei der Verschleißbeobachtung von Bälgen aus dem Stand der Technik. Dies sind insbesondere die Rollfaltenbereiche bzw. die Anlagebereiche von Luftfedern an Anschlussteile.

Eine weitere vorteilhafte Ausbildung besteht darin, dass die länglich konkaven Einprägungen ein gerundetes Grundprofil aufweisen, im mittleren Bereich des Grundprofils vorzugsweise mit einem Radius zwischen R=2 und R=10 mm.

Eine weitere vorteilhafte Ausbildung besteht darin, dass die zwischen zwei nebeneinander liegenden länglich konkaven Einprägungen gebildeten konvexen Erhebungen ein gerundetes Spitzenprofil aufweisen, vorzugsweise mit einem Radius zwischen R=0,5 und R=1,0 mm. Ebenso ist es vorteilhaft, dass die länglich konkaven Einprägungen eine senkrecht zu deren Längserstreckung gemessene Breite bzw. Teilung von 3 mm bis 10 mm aufweisen, sowie eine Tiefe von 0,5 mm bis 2,0 mm. Es hat sich überraschenderweise gezeigt dass mit solchen Maßgaben nicht nur die makroskopische Verformung der Oberfläche bestmöglich realisiert wird, sondern gleichermaßen auch die oben bereits beschriebene vorteilhafte Verformung und Reinigung im Rauigkeitsbereich der Oberfläche optimiert wird.

Die erfindungsgemäße Ausbildung besteht darin, dass aus der Außenoberfläche hervortretende Stützrippen die länglich konkaven Einprägungen kreuzen, wobei die Stützrippen die zwischen zwei nebeneinander liegenden länglich konkaven Einprägungen gebildeten konvexen Erhebungen überragen und vorzugsweise in einem Winkel von bis zu 50° zu den Einprägungen oder zur Balgachse geneigt sind. Zusammen mit der erfindungsgemäßen Ausprägung der Oberfläche verhindern solche erhaben ausgebildeten Stützrippen, dass sich die für Verschmutzungen prädestinierten Oberflächenbereiche mit ihrer gesamten Fläche an zum Beispiel Anschlussteile anlegen können und so auf Verunreinigungen, Sand oder Staub gepresst werden können. Durch die solcherart geneigte, schräge oder diagonale Anordnung der Stützrippen kann deren Länge auf der Luftfederbalgaußenseite außerdem vergrößert und auf die jeweiligen geometrischen Erfordernisse angepasst werden.

Der erfindungsgemäße Luftfederbalg lässt sich, wie oben bereits dargestellt, in besonders vorteilhafter Weise für die Luftfederung von Schienenfahrzeugen oder Lastkraftwagen verwenden.

Anhand eines Ausführungsbeispiels soll die Erfindung näher erläutert werden. Es zeigen
- Fig. 1: den vorderen Teil eines schienengebundenen Kurzstreckentriebwagens als Prinzipskizze,
- Fig. 2: einen erfindungsgemäßen Luftfederbalg,
- Fig. 3: einen vergrößerten Ausschnitt aus der Balgwand des Luftfederbalgs gemäß Fig. 2,
- Fig. 4: den in der Figur 1 dargestellten Luftfederbalg in einer anderen Ansicht und im Schnitt,
- Fig. 5: einen Abschnitt aus der aus dem in der Figur 4 dargestellten Luftfederbalg,
- Fig. 6: eine Vergrößerung der im Schnitt dargestellten Balgwand des erfindungsgemäßen Luftfederbalgs,
- Fig. 7: einen Luftfederbalg mit glatter Oberfläche aus dem Stand der Technik.

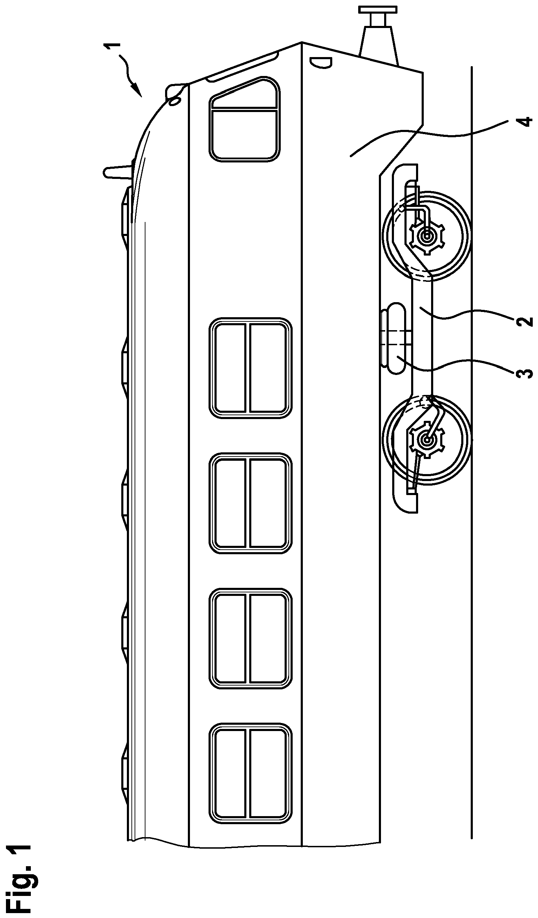

Fig. 1 zeigt prinzipiell den vorderen Teil eines Schienenfahrzeuges, nämlich eines schienengebundenen Kurzstreckentriebwagens 1 mit einen Fahrschemel bzw. Fahrgestell 2. Der Kurzstreckentriebwagen ist mit einem luftgefederten Fahrwerk versehen, bei dem der Fahrschemel u.a. über einen Luftfederbalg 3, eine so genannten Halbbalg, mit der Karosserie 4 des Triebwagens 1 verbunden ist.

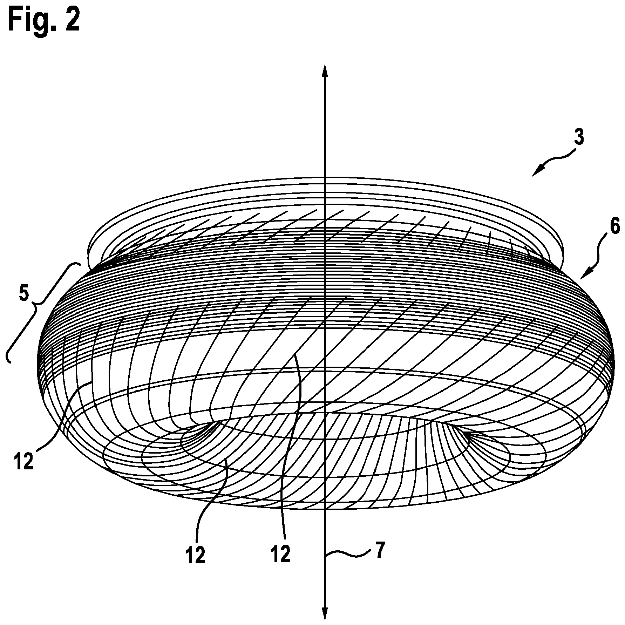

Die Fig. 2 zeigt den Luftfederbalg 3 aus elastomerem Material als Einzelteil. Der Luftfederbalg 3 ist an seinen Balgenden mit Hilfe von hier nicht näher dargestellten Anschlussteilen, nämlich Luftfederdeckel und Felge, zwischen dem Wagenkasten bzw. der Karosserie eines Schienenfahrzeuges und dem Fahrschemel eingespannt, also zwischen gefederter und ungefederter Masse. Beim Einfedern wird der Luftfederbalg 3 in einer Rollbewegung verformt, wölbt sich aus und legt sich mehr oder weniger an die Anschlussteile an.

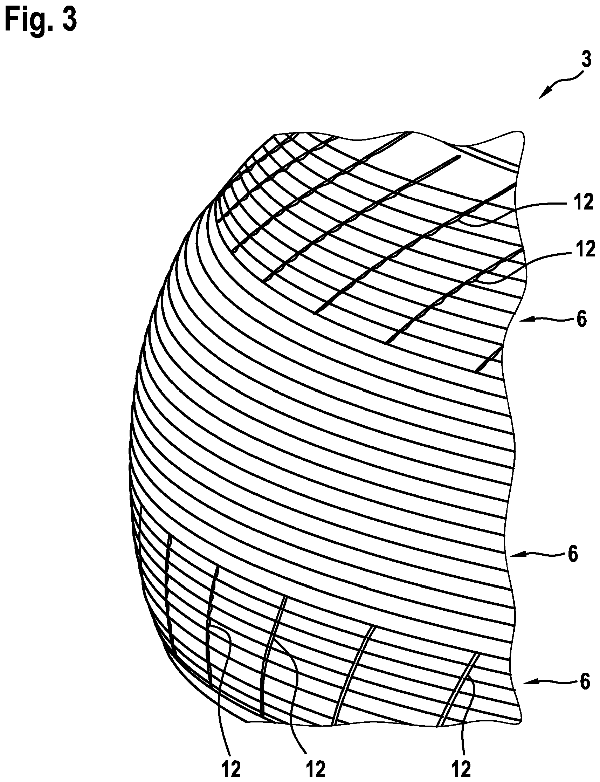

Der Luftfederbalg 3 weist mindestens auf Teilen 5 seiner Außenoberfläche, hier nämlich etwa in den oberen zwei Dritteln seiner Außenoberfläche, eine von einer im Wesentlichen glatten Oberfläche sich unterscheidende Struktur auf, wie in Fig. 2 und 3 gut erkennbar. Die Struktur besteht hier aus einer Vielzahl von auf der Außenoberfläche ausgebildeten länglich konkaven Einprägungen 6, die in ihrer Anordnung zur Achse des Luftfederbalges so ausgerichtet sind, dass durch das elastische Ein- bzw. Ausfedern des Luftfederbalgs die Form der Einprägungen so veränderbar ist, dass an der Oberfläche bzw. in den Einprägungen und auch in den Rauigkeiten anhaftende und aus der Umgebung stammende Fremdstoffe lösbar sind.

Hierzu liegen die länglich konkaven Einprägungen 6 ringförmig nebeneinander und erstrecken sich in Umfangsrichtung und senkrecht zur Hauptbelastungsrichtung 7 des Luftfederbalgs 3. Die Hauptbelastungsrichtung 7 ist koaxial zur Balgachse.

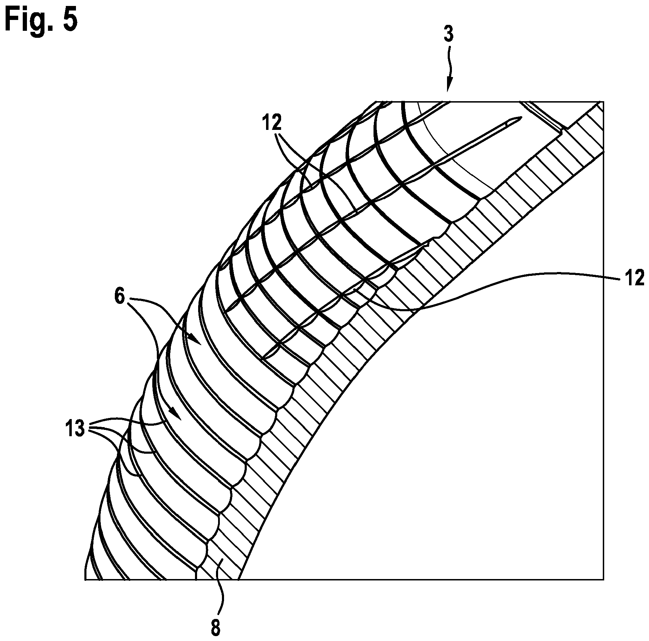

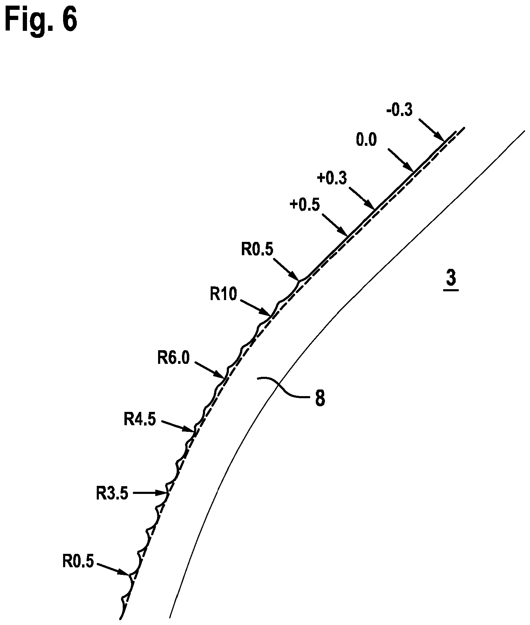

Im Querschnitt ergibt sich durch die ringförmig nebeneinander angeordneten länglich konkaven Einprägungen 6 auf der äußeren Oberfläche eine Art Wellenstruktur in der Oberfläche der Balgwand, wie dies insbesondere in der Zusammenschau mit den Fig. 5 und 6 deutlich wird.

Figur 3 zeigt in einer Ansicht einen vergrößerten Ausschnitt aus der Balgwand des Luftfederbalgs 3. Hier werden die ringförmig nebeneinander angeordneten länglich konkaven Einprägungen 6 und die Struktur der Balgwand noch einmal sehr deutlich.

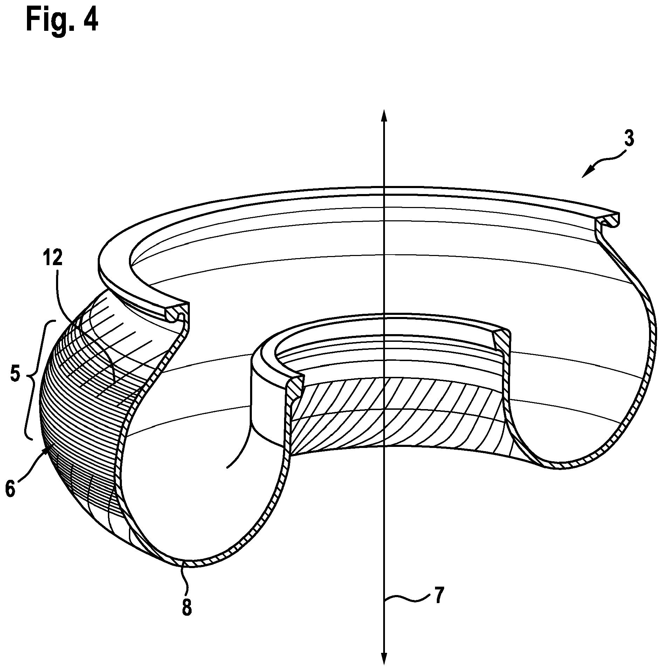

Fig. 4 zeigt den in der Figur 1 dargestellten Luftfederbalg 3 noch einmal in einer anderen Ansicht und im Schnitt, so dass Außenoberfläche und Innenoberfläche des Luftfederbalgs 3 zu sehen sind.

Fig.5 zeigt wiederum einen Abschnitt aus dem in der Figur 4 dargestellten Luftfederbalg 3. In beiden Figuren 4 und 5 sind die wellenförmige Ausprägung der Oberfläche und die ringförmig nebeneinander angeordneten länglich konkaven Einprägungen 6 besonders deutlich dargestellt.

Gleiches gilt für die Figur 6, die eine Vergrößerung der im Schnitt dargestellten Balgwand 8 darstellt. Hier ist anhand der in dieser Figur eingetragenen Radien und Tiefenwerte eine Ausführung gezeigt, bei der Gruppen von mehreren nebeneinander liegenden Einprägungen abhängig von ihrer Position auf der Außenoberfläche des Luftfederbalgs eine unterschiedliche Breite und Tiefe T aufweisen. Die Einprägungen weisen ein gerundetes Grundprofil sowie zwischen je zwei nebeneinander liegenden Einprägungen 6 konvexe Erhebungen 13 mit einem gerundeten Spitzenprofil auf.

Die länglich konkaven Einprägungen weisen eine senkrecht zu deren Längserstreckung gemessene Breite bzw. Teilung von 7 mm bis 10 mm auf

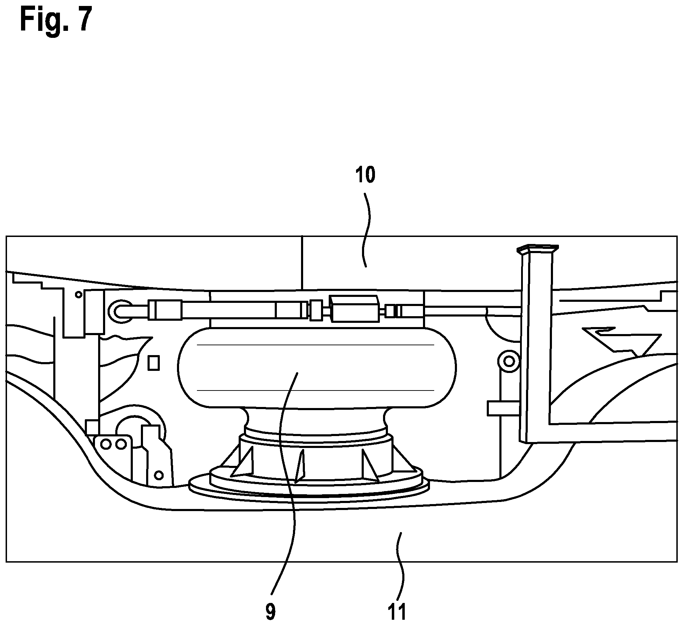

Zur Verdeutlichung des Unterschiedes zum Stand der Technik zeigt die Figur 7 noch einmal einen Luftfederbalg 9 mit glatter Oberfläche aus dem Stand der Technik, der zwischen einem Wagenkasten 10 und einem Fahrschemel 11 eingebaut ist.

In den Fig. 2 bis 5 erkennt man auch die aus der Außenoberfläche hervortretenden Stützrippen 12, die die länglich konkaven Einprägungen 6 kreuzen und die zwischen zwei nebeneinander liegenden Einprägungen gebildeten konvexen Erhebungen überragen. Die Stützrippen sind hier in einem Winkel 45° zu den Einprägungen und zur Balgachse geneigt.

### Bezugszeichenliste

### (Teil der Beschreibung)

- 1: Kurzstreckentriebwagen
- 2: Fahrschemel bzw. Fahrgestell
- 3: Luftfederbalg, erfindungsgemäß
- 4: Karosserie
- 5: Mit der erfindungsgemäßen Struktur versehene Teile der Außenoberfläche
- 6: länglich konkave Einprägung
- 7: Hauptbelastungsrichtung / Belastungsrichtung
- 8: Balgwand
- 9: Luftfederbalg, Stand der Technik
- 10: Karosserie
- 11: Fahrschemel
- 12: Stützrippe
- 13: Konvexe Erhebung zwischen zwei länglich konkaven Einprägungen

## Patentansprüche

1. Luftfederbalg (3) aus elastomerem Material, der an seinen Balgenden mit Hilfe von Anschlussteilen zwischen gefederter und ungefederter Masse eingespannt ist und beim Ein- bzw. Ausfedern Rollbewegungen ausführt und/oder sich an Anschlussteile anlegt, wobei der Luftfederbalg (3) mindestens auf Teilen (5) seiner Außenoberfläche eine von einer im Wesentlichen glatten Oberfläche sich unterscheidende Struktur aufweist, **dadurch gekennzeichnet, dass** die Struktur eine Vielzahl von auf der Außenoberfläche ausgebildeten länglich konkaven Einprägungen (6) enthält, die sich ringförmig nebeneinander liegend oder schraubenförmig in Umfangsrichtung und senkrecht zur Belastungsrichtung (7) des Luftfederbalgs (3) erstrecken und die in ihrer Anordnung zur Achse des Luftfederbalges so ausgerichtet sind, dass durch das elastische Ein- bzw. Ausfedern des Luftfederbalgs (3) die Form der Einprägungen so veränderbar ist, dass an der Oberfläche bzw. in den Einprägungen anhaftende Fremdstoffe lösbar sind, wobei aus der Außenoberfläche hervortretende Stützrippen (12) die länglich konkaven Einprägungen kreuzen und wobei die Stützrippen (12) die zwischen zwei nebeneinander liegenden länglich konkaven Einprägungen gebildeten konvexen Erhebungen (13) überragen und vorzugsweise in einem Winkel von bis zu 50° zu den Einprägungen (6) oder zur Balgachse geneigt sind.

2. Luftfederbalg nach Anspruch 1, bei dem die länglich konkaven Einprägungen (6) Unterbrechungen aufweisen, insbesondere kreuzende Kanäle oder Rillen, die mehrere nebeneinander liegende Einprägungen miteinander verbinden.

3. Luftfederbalg nach einem der Ansprüche 1 oder 2, bei dem die länglich konkaven Einprägungen (6), vorzugsweise Gruppen von mehreren nebeneinander liegenden Einprägungen, abhängig von ihrer Position auf der Außenoberfläche des Luftfederbalgs eine unterschiedliche Breite und/oder Tiefe aufweisen.

4. Luftfederbalg nach einem der Ansprüche 1 bis 3, bei dem die länglich konkaven Einprägungen ein gerundetes Grundprofil aufweisen, im mittleren Bereich des Grundprofils vorzugsweise mit einem Radius zwischen R=2 und R=10 mm.

5. Luftfederbalg nach einem der Ansprüche 1 bis 4, bei dem die zwischen zwei nebeneinander liegenden länglich konkaven Einprägungen (6) gebildeten konvexen Erhebungen ein gerundetes Spitzenprofil aufweisen, vorzugsweise mit einem Radius zwischen R=0,5 und R=1,0 mm.

6. Luftfederbalg nach einem der Ansprüche 1 bis 5, bei dem die länglich konkaven Einprägungen (6) eine senkrecht zu deren Längserstreckung gemessene Breite bzw. Teilung von 3 mm bis 10 mm aufweisen.

7. Luftfederbalg nach einem der Ansprüche 1 bis 6, bei dem die länglich konkaven Einprägungen (6) eine Tiefe von 0,5 mm bis 2,0 mm aufweisen.

8. Verwendung eines Luftfederbalgs nach einem der Ansprüche 1 bis 7 für die Luftfederung von Schienenfahrzeugen oder Lastkraftwagen.

## Claims

1. Air spring bellows (3) made of elastomeric material, which is clamped in place at its bellows ends with the aid of connection parts between a sprung and an unsprung mass and carries out rolling movements during compression and extension and/or bears against connection parts, wherein the air spring bellows (3) has, at least one parts (5) of its outer surface, a structure other than a substantially smooth surface, **characterized in that** the structure contains a multiplicity of elongately concave indentations (6) which are formed on the outer surface, extend annularly alongside one another or helically in the circumferential direction and perpendicularly to the loading direction (7) of the air spring bellows (3) and are oriented in terms of their arrangement with respect to the axis of the air spring bellows such that, as a result of the elastic compression and extension of the air spring bellows (3), the shape of the indentations is variable such that foreign material adhering to the surface or in the indentations is detachable, wherein supporting ribs (12) protruding from the outer surface cross the elongately concave indentations and wherein the supporting ribs (12) project beyond the convex elevations (13) formed between two elongately concave indentations located alongside one another and are preferably inclined at an angle of up to 50° to the indentations (6) or to the bellows axis.

2. Air spring bellows according to Claim 1, wherein the elongately concave indentations (6) have interruptions, in particular crossing channels or grooves, which connect together a plurality of indentations located alongside one another.

3. Air spring bellows according to either of Claims 1 and 2, wherein the elongately concave indentations (6), preferably groups of indentations located alongside one another, have different widths and/or depths depending on their position on the outer surface of the air spring bellows.

4. Air spring bellows according to one of Claims 1 to 3, wherein the elongately concave indentations have a rounded basic profile, preferably, in the central region of the basic profile, with a radius of between R=2 and R=10 mm.

5. Air spring bellows according to one of Claims 1 to 4, wherein the convex elevations formed between two elongately concave indentations (6) located alongside one another have a rounded tip profile, preferably with a radius of between R=0.5 and R=1.0 mm.

6. Air spring bellows according to one of Claims 1 to 5, wherein the elongately concave indentations (6) have a width or pitch, measured perpendicularly to their longitudinal extension, of 3 mm to 10 mm.

7. Air spring bellows according to one of Claims 1 to 6, wherein the elongately concave indentations (6) have a depth of 0.5 mm to 2.0 mm.

8. Use of an air spring bellows according to one of Claims 1 to 7 for the air suspension of rail vehicles or trucks.

## Revendications

1. Soufflet de suspension pneumatique (3) en matériau élastomère, qui est serré à ses extrémités de soufflet à l'aide de pièces de raccordement entre une masse suspendue et une masse non suspendue et qui, lors de la compression ou de l'extension, exécute des mouvements de roulement et/ou s'appuie sur des pièces de raccordement, le soufflet de suspension pneumatique (3) présentant au moins sur des parties (5) de sa surface extérieure une structure qui se distingue d'une surface essentiellement lisse, **caractérisé en ce que** la structure contient une pluralité d'empreintes concaves allongées (6) formées sur la surface extérieure, qui s'étendent sous forme annulaire côte à côte ou en hélice dans la direction circonférentielle et perpendiculairement à la direction de charge (7) du soufflet de suspension pneumatique (3) et dont l'agencement par rapport à l'axe du soufflet de suspension pneumatique est orienté de telle sorte que, par la compression ou l'extension élastique du soufflet de suspension pneumatique (3), la forme des empreintes peut varier de telle sorte que des matières étrangères adhérant sur la surface ou dans les empreintes peuvent être détachées, des nervures de support (12) faisant saillie à partir de la surface extérieure croisant les empreintes concaves allongées et les nervures de support (12) dépassant les protubérances convexes (13) formées entre deux empreintes concaves allongées situées côte à côte et étant de préférence inclinées d'un angle de jusqu'à 50° par rapport aux empreintes (6) ou à l'axe du soufflet.

2. Soufflet de suspension pneumatique selon la revendication 1, dans lequel les empreintes concaves allongées (6) présentent des interruptions, notamment des canaux ou des rainures qui se croisent, qui relient entre elles plusieurs empreintes situées côte à côte.

3. Soufflet de suspension pneumatique selon l'une quelconque des revendications 1 ou 2, dans lequel les empreintes concaves allongées (6), de préférence des groupes de plusieurs empreintes situées côte à côte, présentent une largeur et/ou une profondeur différentes en fonction de leur position sur la surface extérieure du soufflet de suspension pneumatique.

4. Soufflet de suspension pneumatique selon l'une quelconque des revendications 1 à 3, dans lequel les empreintes concaves allongées présentent un profil de base arrondi, de préférence avec un rayon compris entre R = 2 et R = 10 mm dans la zone centrale du profil de base.

5. Soufflet de suspension pneumatique selon l'une quelconque des revendications 1 à 4, dans lequel les protubérances convexes formées entre deux empreintes concaves allongées (6) situées côte à côte présentent un profil de pointe arrondi, de préférence avec un rayon compris entre R = 0,5 et R = 1,0 mm.

6. Soufflet de suspension pneumatique selon l'une quelconque des revendications 1 à 5, dans lequel les empreintes concaves allongées (6) présentent une largeur ou un pas mesuré perpendiculairement à leur extension longitudinale de 3 mm à 10 mm.

7. Soufflet de suspension pneumatique selon l'une quelconque des revendications 1 à 6, dans lequel les empreintes concaves allongées (6) présentent une profondeur de 0,5 mm à 2,0 mm.

8. Utilisation d'un soufflet de suspension pneumatique selon l'une quelconque des revendications 1 à 7 pour la suspension pneumatique de véhicules ferroviaires ou de camions.
